# EUROPÄISCHE PATENTSCHRIFT

(11) **EP 1 473 447 B1**
(45) Veröffentlichungstag und Bekanntmachung des Hinweises auf die Patenterteilung: **15.02.2006**
(21) Anmeldenummer: 04007939.4
(22) Anmeldetag: 01.04.2004
(51) Int. Cl.: F01N 3/20, B01D 53/94, E03B 7/10

(54) **Flüssigkeitsbehälter für Kraftfahrzeuge, insbesondere für eine wässrige Harnstofflösung**
Liquid container for motor vehicles, especially an aqueous urea solution
Réservoir pour liquide pour véhicules automobiles, notamment pour solution aqueuse d'urée

(30) Priorität: 29.04.2003 DE 10319151
(43) Veröffentlichungstag der Anmeldung: 03.11.2004
(73) Patentinhaber: MAN Nutzfahrzeuge Aktiengesellschaft, 80976 München (DE)
(72) Erfinder: Knetsch, Holger, 85221 Dachau (DE); Kreutmair, Josef, Dipl.-Ing., 85276 Pfaffenhofen (DE); Zenz, Robert, Dipl.-Ing., 85229 Markt Indersdorf (DE); Eckert, Reinhard, Dipl.-Ing., 82178 Puchheim (DE)

(56) Entgegenhaltungen:
- WO-A-01/09004
- DE-A- 3 125 463
- DE-A- 4 432 576
- US-A- 2 273 505
- US-B1- 6 363 771
- PATENT ABSTRACTS OF JAPAN vol. 2003, no. 07, 3. Juli 2003 (2003-07-03) & JP 2003 064263 A (RINNAI CORP), 5. März 2003 (2003-03-05)

## Beschreibung

Die Erfindung betrifft einen Flüssigkeitsbehälter für Kraftfahrzeuge, insbesondere für eine wässrige Hamstofflösung, nach dem Oberbegriff des Patentanspruches 1 und Patentanspruches 3.

Aus EP 0 555 746 A1 ist es bekannt, aus einem Flüssigkeitsbehälter wässrige Harnstofflösung einer Hydrolyseeinrichtung zuzuführen, in welcher der Harnstoff in Ammoniak (NH₃) und Kohlendioxid (CO₂) zersetzt wird. Das Gasgemisch aus Ammoniak, CO₂ und Abgas einer Brennkraftmaschine, insbesondere eines Dieselmotors, wird einem selektiven Reduktionskatalysator (SCR-Katalysator) zugeleitet, in welchem eine NOₓ-Reduktion stattfindet. Hierdurch wird die Bereitstellung und Lagerung von Ammoniak mit den dazu erforderlichen Sicherheitsvorkehrungen vermieden.

Bei tiefen Außentemperaturen kann die wässrige Hamstofflösung im Behälterinnenraum gefrieren. Dadurch entsteht die Gefahr der Beschädigung des Behälters aufgrund der Volumenvergrößerung der gefrierenden Hamstofflösung.

In diesem Zusammenhang beschreibt die DE 44 32 576 A1 einen Vorratsbehälter für eine Einrichtung zur Einbringung einer Flüssigkeit in ein Strömungsmedium, bei der sowohl der Vorratsbehälter als auch die Flüssigkeitszuführungsleitung mittels eines Wärmetausches zu beheizen sind, um Frostschäden zu vermeiden. Zur Beheizung wird ein flüssiges Heizmedium verwendet, das einen Wärmetauscher durchströmt, der in den Tank ragt und in direktem Kontakt mit dem zu beheizenden Medium steht. Bei einer derartigen technischen Lösung, bei der das Heizelement n Form eines Tauchsieders in die zu erwärmende Flüssigkeit eingetaucht wird, besteht allerdings beim Einfrieren die Gefahr, dass es zu Beschädigungen am Wärmeaustauscher kommt.

Aufgabe der Erfindung ist es, einen Flüssigkeitsbehälter der eingangs genannten Art zu schaffen, mit welchem eine sichere Bereitstellung der Flüssigkeit, insbesondere der wässrigen Harnstofflösung gewährleistet wird.

Diese Aufgabe wird erfindungsgemäß durch die kennzeichnenden Merkmale des Patentanspruches 1 gelöst.

Die Erfindung betrifft einen in einem Kraftfahrzeug angeordneten Flüssigkeitsbehälter für eine Harnstofflösung mit einem nach unten von einem Behälterboden, seitlich von Seitenwänden und nach oben von einer oben liegenden Behälterwand begrenzten Behälterinnenraum, in welchen die Flüssigkeit einfüllbar ist und die oben liegende Behälterwand für einen flüssigkeitsdichten Abschluss des Behälterinnenraums sorgt, mit einer Fülleinrichtung zum Einfüllen der Flüssigkeit in den Behälterinnenraum und mit einer Entnahmeeinrichtung zum Entnehmen der Flüssigkeit aus dem Behälterinnenraum. Die erfindungsgemäße Ausführung des Flüssigkeitstanks zeichnet sich dadurch aus, dass im Behälterboden und/oder in den seitlichen Behälterwänden eine Heizung angeordnet ist.

Vorzugsweise wird zwischen einem maximalen Füllstandspegel bei maximalem Füllstand der Flüssigkeit im Behälterinnern und der Innenseite einer oben liegenden Behälterwand, mit welcher der Behälterinnenraum flüssigkeitsdicht abgeschlossen ist, ein Freiraum gebildet. Dieser Freiraum entspricht einer Volumenvergrößerung, insbesondere einem "Ausblühen", der durchfrierenden Flüssigkeit im Behälterinnern.

Das Ausblühen ist der letzte Vorgang im Gefriervorgang z. B. der Harnstofflösung und erfolgt im oberen Bereich der ursprünglichen Flüssigkeit und etwa in der Mitte des Behälters.

Ein Durchfrieren der Flüssigkeit im Fahrbetrieb wird mit Hilfe der Heizung, welche beispielsweise im Behälterboden integriert ist, verhindert. Die Heizung wird vorzugsweise von der Motorkühlflüssigkeit beheizt. Hierzu können die Heizrohre der Heizung an den Kühlflüssigkeitskreislauf der Brennkraftmaschine, insbesondere des Dieselmotors angeschlossen sein. Die Heizung kann jedoch auch elektrisch betrieben werden und hierzu als elektrische Heizung ausgebildet sein.

Zur Lösung der Aufgabe kann im Behälter nur der Freiraum oder die Heizung oder es können sowohl der Freiraum als auch die Heizung vorgesehen sein.

In jedem der genannten Ausführungen muss jedoch der Behälter so ausgestaltet sein, dass der Inhalt des Behälters gefrieren kann, ohne dass der Behälter zerstört wird.

Sobald die Heizung in der Behälterwand integriert wird, geschieht dies derart dass in den Behälterinnenraum, in welchem die Flüssigkeit sich befindet, keine Heizungsteile ragen. Ferner kann das Behälterinnere nach außen teilweise oder ganz wärmeisoliert sein. Hierzu kann an der Außenseite des Behälters an entsprechenden Stellen eine Wärmeisolierung vorgesehen sein.

Eine Entnahmeeinrichtung zum Entnehmen der Flüssigkeit aus dem Behälterinnenraum ist vorzugsweise im Behälterboden vorgesehen. Ferner kann im Boden eine Füllstandsmesseinrichtung, insbesondere eine Ultraschall-Füllstandsmesseinrichtung angeordnet sein. Mit dieser kann der jeweilige Füllstand der Flüssigkeit im Behälter überwacht werden.

Ferner ist eine Druckausgleichseinrichtung vorgesehen, welche zwischen dem Behälterinnenraum im Bereich des Bodens und dem Behälterinnenraum über dem Flüssigkeitspegel einen Druckausgleich schafft.

Die Druckausgleicheinrichtung wirkt dann, wenn der Behälterinhalt teilweise oder ganz gefroren ist und ein Tauen des Behälterinhaltes, durch Wärmeeinwirkung von außen her, beginnt. Es bildet sich dann zuerst in Bodennähe des Behälterinnenraumes Flüssigkeit, die durch die Entnahmeeinrichtung abgezogen werden kann.

Durch diesen Vorgang kann ein Unterdruck im Bodenbereich des Behälters entstehen, den die Druckausgleichseinrichtung verhindert.

Die Füllstandsmesseinrichtung, die Druckausgleichseinrichtung und die Entnahmeeinrichtung sind so ausgelegt, dass diese nicht oder nur geringfügig in den Behälterinnenraum, in welchem die Flüssigkeit in Bereitschaft gehalten wird, ragen. Hierdurch wird eine Beschädigung dieser Teile beim Durchfrieren der Flüssigkeit verhindert.

Die Leitung der Druckausgleichseinrichtung ist aus elastischem Material. z. B. aus Gummi, und ist vorzugsweise in der Wandung oder außerhalb der Wandung des Behälters verlegt.

Die Entnahmeeinrichtung ist vorzugsweise an eine Hydrolyseeinrichtung, die vor einer katalytischen NOₓ-Reduktionseinrichtung ist, im Abgasstrom einer Brennkraftmaschine, insbesondere eines Dieselmotors, angeschlossen. Die Brennkraftmaschine, insbesondere der Dieselmotor, kann auch in einer stationären Einrichtung betrieben werden.

Die Gefahr der Zerstörung des Flüssigkeitsbehälters kann auch bei anderen Flüssigkeiten, die im Behälterinnenraum durchfrieren können, bestehen. Auch zur Aufbewahrung und Bereitstellung derartiger Flüssigkeiten ist der beschriebene Behälter geeignet.

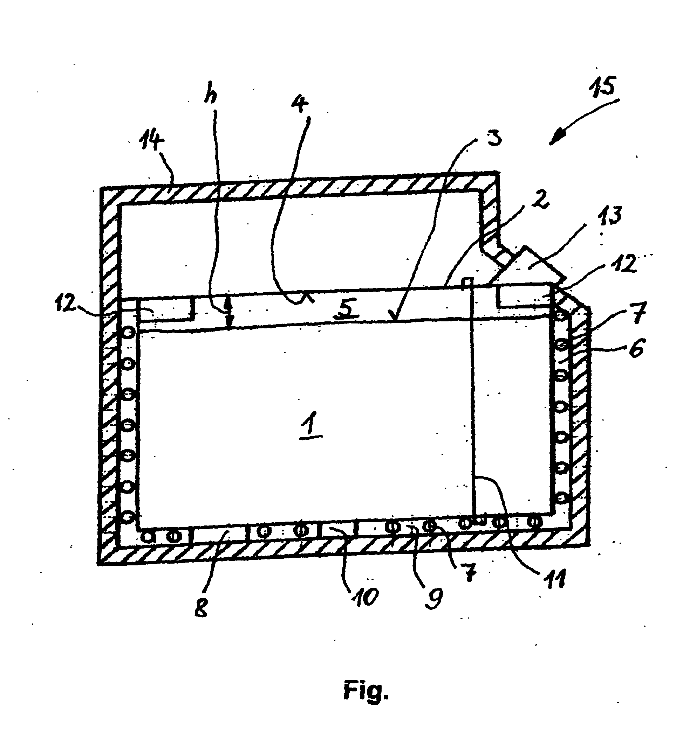

Zur weiteren Erläuterung der Erfindung dient das in der Figur schematisch dargestellte Ausführungsbeispiel eines Flüssigkeitsbehälters.

Der in der Figur dargestellte Flüssigkeitsbehälter, insbesondere für eine wässrige Harnstofflösung, umfasst einen Behälterinnenraum 1, in welchen über eine Fülleinrichtung 13, z. B. Füllstutzen, im oberen Teil des Behälters eine Flüssigkeit, insbesondere eine wässrige Harnstofflösung eingefüllt werden kann. Die Flüssigkeit kann bis zu einem maximalen Flüssigkeitspegel 3 (maximaler Füllstand) in den Behälterinnenraum 1 eingebracht werden. Der Behälterinnenraum 1 ist nach oben hin mit einer oben liegenden Behälterwand 2, die eine Abdeckung bildet, flüssigkeitsdicht verschlossen.

Zwischen dem maximalen Flüssigkeitspegel 3 und einer Innenseite 4 der oben liegenden Behälterwand 2 ist ein Freiraum 5 vorgesehen. Dieser Freiraum 5 ist durch einen entsprechenden Abstand h zwischen dem maximalen Flüssigkeitspegel 3 und der Innenseite 4 der Behälterwand 2 gebildet. Dadurch ist es möglich, dass, wenn ein "Ausblühen" an der Oberseite der gefrierenden Flüssigkeit erfolgt, ein dieser Volumenvergrößerung entsprechender Raum zur oben liegenden Behälterwand 2 vorhanden ist. Durch die Schaffung des Freiraumes 5 wird eine größere Verformung aller Behälterwände (2, 6, 9) und eine daraus möglicherweise entstehende Zerstörung des Behälters 15 verhindert.

Vorzugsweise weist nur die Bodenwandung 9 eine Heizung auf. Es ist aber auch möglich, in die seitlichen Behälterwände 6 eine Heizung 7 zu integrieren. Die Heizung 7 kann aus Heizungsrohren bestehen, welche an den Kühlkreislauf der nicht näher dargestellten Brennkraftmaschine angeschlossen sind. Es kann sich bei der Heizung 7 auch um eine elektrische Heizung handeln. Bevorzugt wird eine an den Kühlkreislauf der Brennkraftmaschine angeschlossene Heizung zum Einsatz gebracht.

Im Behälterboden 9 befindet sich eine Entnahmeeinrichtung 8 zum Entnehmen der Flüssigkeit aus dem Behälterinnenraum. Die Entnahmeeinrichtung 8 kann an einen Hydrolysekatalysator, wie er aus der EP 0 555 746 A1 bekannt ist, angeschlossen sein. Wie schon erläutert, ist die Entnahmeeinrichtung so ausgebildet, dass sie nicht oder nur geringfügig in den Behälterinnenraum 1 ragt.

Im Behälterboden 9 befindet sich ferner eine Füllstandsmesseinrichtung 10. Diese Füllstandsmesseinrichtung 10 ist vorzugsweise als Ultraschall-Messeinrichtung ausgebildet, deren die Ultraschallwellen aussendende Fläche und die reflektierten Schallwellen empfangende Fläche nach oben in Richtung zum Flüssigkeitspegel hin gerichtet sind. Mit der Füllstandsmesseinrichtung 10 ist eine ständige Überwachung des Füllstandes im Behälterinnenraum 1 möglich.

Wenn der Behälterinhalt gefroren ist, liefert die Füllstandsmesseinrichtung 10 eine Art Fehlersignal. In der Füllstandsmesseinrichtung 10 kann ein Temperatursensor (nicht dargestellt) integriert sein. Aufgrund der Behältertemperatur oder der Außentemperatur kann das Fehlersignal gewandelt werden, so dass der Fahrzeugführer ein entsprechendes, verständliches Signal durch die Anzeigetafel bzw. eine Anzeige im Armaturenbrett erhält. Der Bordrechner kennt auch die Außentemperatur. Falls das Fehlersignal der Füllstandsmesseinrichtung 10 nicht durch die Füllstandsmesseinrichtung 10 selbst gewandelt wird, kann dies im Bordrechner erfolgen, so dass auch in diesem Falle der Fahrzeugführer ein verständliches Signal erhält.

Für die Befüllung des Behälterinnenraumes 1 ist eine Vorrichtung vorzusehen, mit der die Flüssigkeit nicht über den höchsten zulässigen Flüssigkeitspegel 3 eingefüllt werden kann. Beispielsweise kann hierfür eine sich selbst abschaltende Zapfpistole verwendet werden.

Ferner ist eine Druckausgleichseinrichtung 11 vorgesehen, welche zwischen dem Raum oberhalb des Flüssigkeitspegels 3 und dem im Bereich des Behälterbodens 9 befindlichen Behälterinnenraums 1 einen Druckausgleich vorsieht.

Die Druckausgleichseinrichtung 11 ist schematisch dargestellt. Sie kann aus einer elastischen Leitung, z. B. einer Gummileitung, und jeweils einem Anschlussstutzen in der Behälterwand 9 und der Behälterwand 2 oder der Behälterwand 6 bestehen. Die genannten Anschlussstutzen ragen vorzugsweise nicht oder nur geringfügig in den Behälterinnenraum 1. Die elastische Leitung bzw. die Gummileitung ist nicht im Behälterinnenraum 1, sondern innerhalb der Behälterwandungen 6, 9 oder innerhalb der Isolierung 7 oder außerhalb des Behälters 15 angebracht. Die Druckausgleichseinrichtung 11 wirkt dann, wenn der Behälterinhalt teilweise oder ganz gefroren ist und ein Tauen des gefrorenen Behälterinhaltes durch Wärmeeinwirkung von außen her beginnt.

Dieser Tauvorgang kann, wenn der Behälter 15 keine Heizung 7 aufweist, durch z. B. eine höhere Außentemperatur erfolgen. Wenn der Behälter 15 eine Heizung 7 aufweist, beginnt der Tauvorgang mit dem Beheizen des Behälters, wenn beispielsweise der Verbrennungsmotor gestartet ist.

In beiden Fällen taut dann zuerst der gefrorene Behälterinhalt in der Nähe des Behälterbodens. Die Entnahmeeinrichtung 8 kann dann bereits, in dem hier beschriebenen Anwendungsfall, Harnstoffflüssigkeit der Hydrolyseeinheit zur Verfügung stellen. Damit im bodennahen Bereich durch die Entnahme der Harnstoffflüssigkeit kein Unterdruck entsteht, der den Behälter ebenfalls zerstören könnte, ist diese Druckausgleichseinrichtung 11 eingerichtet.

Weiterhin ist durch die Druckausgleichseinrichtung 11 relativ schnell sichergestellt, dass die Harnstoffdosierung funktioniert, bevor ein großer Teil des gefrorenen Gutes aufgetaut ist.

Die Befestigung des Behälters an einem Traggestell, beispielsweise eines Kraftfahrzeugs oder einer stationären Einrichtung, erfolgt mittels Halterungen 12, die im oberen Bereich des Behälters, insbesondere im Bereich des Freiraumes 5 vorgesehen sind. Die Behälterhalterungen 12 befinden sich somit in einem Bereich, in welchem die Gefahr einer Verformung des Behälters beim Durchfrieren der Flüssigkeit gering ist.

Der Behälter kann mit einer außen liegenden Wärmeisolierung 14 ganz, wie es in der Figur dargestellt ist, oder teilweise umgeben sein. Die Wärmeisolierung 14 kann auch von einer über den Behälter gestülpten Abdeckung und einer Isolierung des Behälterbodens gebildet werden.

Es ist aber auch denkbar, nur eine Isolierung 14 und Heizung 7 für den Behälterboden 9 vorzusehen. Weiterhin ist es möglich, die Isolierung 14 und die Heizung 7 vom Behälterboden 9 bis in die Höhe des maximalen Flüssigkeitspegels 3 zu führen. In den genannten Fällen, in denen eine Heizung 7 und Isolierung 14 vorgesehen ist, kann die Heizung in die Isolierung integriert werden.

Durch die genannten Maßnahmen werden mögliche Durchfrierzyklen reduziert.

Außerdem kann die oben liegende Behälterwand 2 als Montageplattform für Anbauteile, die ebenfalls Harnstoff führen, ausgebildet sein.

### Bezugszeichenliste

- 1: Behälterinnenraum
- 2: oben liegende Behälterwand
- 3: maximaler Flüssigkeitspegel (maximaler Flüssigkeitsstand)
- 4: Innenseite der oben liegenden Behälterwand
- 5: Freiraum
- 6: seitliche Behälterwände
- 7: Heizung
- 8: Entnahmeeinrichtung
- 9: Behälterboden
- 10: Füllstandsmesseinrichtung
- 11: Druckausgleichseinrichtung
- 12: Behälterhalterung
- 13: Fülleinrichtung (Füllstutzen)
- 14: Behälterisolierung

## Patentansprüche

1. Kraftfahrzeughamstofflösungsbehälter mit einem nach unten von einem Behälterboden (9), seitlich von Seitenwänden (6) und nach oben von einer oben liegenden Behälterwand (2) begrenzten Behälterinnenraum, in welchen die Flüssigkeit einfüllbar ist und die oben liegende Behälterwand für einen flüssigkeitsdichten Abschluss des Behälterinnenraums sorgt, mit einer Fülleinrichtung zum Einfüllen der Flüssigkeit in den Behälterinnenraum und mit einer Entnahmeeinrichtung zum Entnehmen der Flüssigkeit aus dem Behälterinnenraum, **dadurch gekennzeichnet, dass** im Behälterboden (9) und/oder in den seitlichen Behälterwänden (6) eine Heizung (7) integriert ist.

2. Flüssigkeitsbehälter nach Anspruch 1, **dadurch gekennzeichnet, dass** die Heizung (7) mit einer Motorkühlflüssigkeit betrieben ist.

3. Flüssigkeitsbehälter nach einem der Ansprüche 1 oder 2, **dadurch gekennzeichnet, dass** die Heizung (7) elektrisch betrieben ist.

4. Flüssigkeitsbehälter nach einem der Ansprüche 1 bis 3, **dadurch gekennzeichnet, dass** die Entnahmeeinrichtung (8) im Behälterboden (9) vorgesehen ist.

5. Flüssigkeitsbehälter nach einem der Ansprüche 1 bis 4, **dadurch gekennzeichnet, dass** im Behälterboden (9) eine berührungslose Füllstandsmesseinrichtung (10), z. B. mittels Ultraschall, angeordnet ist.

6. Flüssigkeitsbehälter nach einem der Ansprüche 1 bis 5, **dadurch gekennzeichnet, dass** zwischen Behälterboden (9) und obenliegender Behälterwand (2) eine Druckausgleichseinrichtung (11) vorgesehen ist, welche zwischen dem Druck im bodennahen Behälterbereich und dem über dem Flüssigkeitspegel (3) herrschenden Druck einen Ausgleich schafft, wenn der Behälterinhalt ganz oder teilweise gefroren ist und der Auftauvorgang beginnt.

7. Flüssigkeitsbehälter nach einem der Ansprüche 1 bis 6, **dadurch gekennzeichnet, dass** der Behälter ganz oder teilweise nach außen wärmeisoliert ist.

8. Flüssigkeitsbehälter nach einem der Ansprüche 1 bis 7, **dadurch gekennzeichnet, dass** zwischen einem maximalen Flüssigkeitspegel (3) bei maximalem Füllstand im Behälterinnenraum (1) und einer Innenseite (4) der oben liegenden Behälterwand (2) ein Freiraum (5) vorgesehen ist, der eine Volumenvergrößerung einer im Behälterinnenraum (1) gefrorenen Flüssigkeit entspricht.

9. Flüssigkeitsbehälter nach Anspruch 8, **dadurch gekennzeichnet, dass** im oberen Behälterbereich, insbesondere in der Nähe oder im Bereich des Freiraumes (5), eine Behälterhalterung (12) vorgesehen ist zum Befestigen des Behälters an einem Traggestell.

10. Flüssigkeitsbehälter nach einem der Ansprüche 1 bis 9, **dadurch gekennzeichnet, dass** die Entnahmeeinrichtung (8) an eine Hydrolyseeinrichtung einer katalytischen NOₓ₋Reduktionseinrichtung im Abgasstrom einer Brennkraftmaschine, insbesondere eines Dieselmotors, angeschlossen ist.

## Claims

1. Vehicle-mounted urea solution tank with a tank interior limited at its lower end by a tank bottom (9), laterally by side walls (6) and at its upper end by a top-mounted tank wall (2), whereby the tank interior can be filled up with the fluid and the top-mounted tank wall makes for fluid-tight closure of the tank interior, with a filler device for filling the fluid into the tank interior and with an extraction device for extracting the fluid from the tank interior, **characterised in that** a heater (7) is integrated in the tank bottom (9) and/or the lateral tank walls (6).

2. Fluid tank according to Claim 1, **characterised in that** the heater (7) is run on an engine cooling fluid.

3. Fluid tank according to one of the Claims 1 or 2, **characterised in that** the heater (7) is run electrically.

4. Fluid tank according to one of the Claims 1 to 3, **characterised in that** the extraction device (8) is provided in the tank bottom (9).

5. Fluid tank according to one of the Claims 1 to 4, **characterised in that** a contactless fluid-level measuring device (10), eg with an ultrasonic feature, is arranged in the tank bottom (9).

6. Fluid tank according to one of the Claims 1 to 5, **characterised in that** a pressure-balancing device (11) is provided between the tank bottom (9) and the top-mounted tank wall (2) and creates a balance between the pressure in the tank area near the bottom and the pressure existing above the fluid level (3) if the tank content is completely or partially frozen and the thawing process commences.

7. Fluid tank according to one of the Claims 1 to 6, **characterised in that** the tank is completely or partially heat-insulated towards the outside.

8. Fluid tank according to one of the Claims 1 to 7, **characterised in that** at maximum fluid level a clear space (5) is provided in the tank interior (1) between a maximum fluid level (3) and an inner side (4) of the top-mounted tank wall (2) and corresponds to a volume enlargement of a fluid frozen in the tank interior (1).

9. Fluid tank according to Claim 8, **characterised in that** a tank bracket (12) for fastening the tank to a carrier rack is provided in the upper tank area, particularly in the vicinity or in the area of the clear space (5).

10. Fluid tank according to one of the Claims 1 to 9, **characterised in that** the extraction device (8) is connected to a hydrolytic device of a catalytic NOx reducing system located in the flow of exhaust gases from an internal combustion engine, particularly from a diesel engine.

## Revendications

1. Réservoir à solution à basée d'urée pour véhicules à moteur, constitué d'un espace intérieur de réservoir délimité, au niveau du dessous, par un fonds de réservoir (9), latéralement, par des parois latérales (6) et, au niveau du dessus, par une paroi supérieure (2), dans lequel le fluide peut être versé et la paroi supérieure du réservoir assure une obturation étanche au fluide de l'espace intérieur du réservoir, avec un dispositif de remplissage pour verser le fluide dans l'espace intérieur du réservoir et un dispositif de soutirage pour prélever le fluide de l'espace intérieur du réservoir, **caractérisé en ce qu'**un chauffage (7) est intégré dans le fonds du réservoir (9) et/ou dans les parois latérales du réservoir (6).

2. Réservoir à fluide selon la revendication 1, **caractérisé en ce que** le chauffage (7) fonctionne à l'aide d'un fluide de refroidissement du moteur.

3. Réservoir à fluide selon l'une quelconque des revendications 1 ou 2, **caractérisé en ce que** le chauffage (7) fonctionne au moyen du courant électrique.

4. Réservoir à fluide selon l'une des revendications 1 à 3, **caractérisé en ce que** le dispositif de soutirage (8) est prévu dans le fonds du réservoir (9).

5. Réservoir à fluide selon l'une des revendications 1 à 4, **caractérisé en ce qu'**un dispositif de mesure du niveau de remplissage (10) sans contact, par exemple, au moyen d'ultrasons, est disposé dans le fonds du réservoir (9).

6. Réservoir à fluide selon l'une des revendications 1 à 5, **caractérisé en ce qu'**est prévu entre le plancher du réservoir (9) et la paroi supérieure du réservoir (2) un dispositif de compensation de pression (11) qui crée une égalisation entre la pression existante dans la zone du réservoir près du fonds et la pression régnant au-dessus du niveau du fluide (3) lorsque le contenu du réservoir est intégralement ou partiellement gelé et que le dégel commence.

7. Réservoir à fluide selon l'une des revendications 1 à 6, **caractérisé en ce que** le réservoir est isolé thermiquement, intégralement ou partiellement, vers l'extérieur.

8. Réservoir à fluide selon l'une des revendications 1 à 7, **caractérisé en ce qu'**est prévu, entre un niveau maximal de fluide (3) pour un niveau maximal de remplissage dans l'espace intérieur du réservoir (1) et une face intérieure (4) de la paroi supérieure du réservoir (2), un espace libre correspondant à l'extension de volume d'un fluide gelé dans l'espace intérieur du réservoir (1).

9. Réservoir à fluide selon la revendication 8, **caractérisé en ce qu'**un support de réservoir (12) est prévu dans la partie supérieure du réservoir, en particulier à proximité ou dans la zone de l'espace libre (5), pour fixer le réservoir sur un cadre porteur.

10. Réservoir à fluide selon l'une des revendications 1 à 9, **caractérisé en ce que** le dispositif de soutirage (8) est raccordé à un dispositif à hydrolyse d'un dispositif de réduction catalytique de NOₓ placé dans le flux des gaz d'échappement d'un moteur à combustion interne, en particulier d'un moteur diesel.
